# FASCICULE DE BREVET EUROPEEN

(11) **EP 3 763 585 B1**
(45) Date de publication et mention de la délivrance du brevet: **25.01.2023**
(21) Numéro de dépôt: 20183528.7
(22) Date de dépôt: 01.07.2020
(51) Int. Cl.: B60T 13/52, B60T 13/567

(54) **DISPOSITIF D'ASSISTANCE AU FREINAGE**
HILFSSERVOMOTOR ZUR BREMSUNG
BRAKING ASSISTANCE DEVICE

(30) Priorité: 08.07.2019 FR 1907642
(43) Date de publication de la demande: 13.01.2021
(73) Titulaire: Renault s.a.s, 92100 Boulogne Billancourt (FR)
(72) Inventeur: CAGNY, Christophe, 91530 Le Val Saint Germain (FR); DELMOULY, Valentin, 78830 Bonnelles (FR)
(74) Mandataire: Renault Group

(56) Documents cités:
- WO-A1-2010/106288
- US-A1- 2004 160 119
- US-B1- 6 253 656

## Description

L'invention concerne un agencement comprenant un dispositif d'assistance au freinage et un capteur de mesure de dépression. L'invention porte encore sur un système de freinage comprenant un tel agencement. L'invention porte encore sur un véhicule automobile comprenant un tel agencement et/ou un tel système de freinage.

On connait du document US6253656 un ensemble comprenant un capteur pour un servofrein à dépression, ou du document WO2010/106288 un dispositif de freinage pour un véhicule comportant un amplificateur de freinage.

Un véhicule, en particulier un véhicule automobile, comprend généralement un dispositif d'assistance au freinage au sein du système de freinage. Un tel dispositif permet notamment d'obtenir une pression hydraulique importante dans le système de freinage tout en fournissant un effort restreint sur la pédale de frein. En outre, un véhicule de l'état de la technique est généralement équipé d'une fonctionnalité appelée « Stop and start » (arrêt et démarrage) permettant d'arrêter le moteur thermique dès l'arrêt du véhicule, par exemple à un feu rouge, et de le redémarrer dès l'absence d'appui sur la pédale de frein par le conducteur par exemple. Pour permettre cette fonctionnalité, un capteur de mesure de dépression est généralement installé sur le dispositif d'assistance au freinage et permet de mesurer la dépression au niveau d'un tel dispositif d'assistance au freinage. Un tel capteur permet de piloter les arrêts et démarrage du moteur thermique. Un tuyau est alors généralement relié à ce capteur de mesure de dépression.

Seulement, eu égard à l'espace exigu au sein d'un compartiment moteur de véhicule, un tel tuyau risque d'être en contact avec au moins un autre élément présent dans le compartiment moteur. C'est notamment le cas lorsque le capteur sur lequel le tuyau vient se brancher n'est pas monté correctement en termes d'orientation. Or, de tels contacts, éventuellement répétés, peuvent engendrer un endommagement du tuyau, voire sa perforation. Une telle situation n'est pas acceptable puisqu'elle engendre une perte d'efficacité du système de freinage potentiellement accidentogène.

Le but de l'invention est de fournir un agencement remédiant aux inconvénients ci-dessus.

Un autre but de l'invention est de proposer un agencement permettant son utilisation pour plusieurs types de véhicules.

Pour atteindre cet objectif, l'invention porte sur un agencement comprenant :
- un élément, ledit élément étant un dispositif d'assistance au freinage de véhicule, notamment de véhicule automobile, comprenant une portion cylindrique et une face circulaire, ou sensiblement circulaire, notamment bombée ou conique ou sensiblement conique, un alésage d'axe principal étant ménagé au sein de cette face circulaire,
- un capteur de mesure de dépression, comprenant un embout cylindrique ou sensiblement cylindrique inséré au moins partiellement dans l'alésage de sorte que l'axe principal de l'élément et l'axe de l'embout cylindrique soient confondus ou sensiblement confondus, le capteur comprenant :
- une face principale parallèle ou sensiblement parallèle à l'axe de l'embout cylindrique,
- une deuxième partie cylindrique d'axe secondaire perpendiculaire ou sensiblement perpendiculaire à la face principale et perpendiculaire ou sensiblement perpendiculaire à l'axe de l'embout cylindrique,
l'agencement comprenant un moyen de fixation du capteur destiné à être fixé de manière amovible au capteur et apte à empêcher le capteur de pivoter autour de l'axe principal de l'alésage, le moyen de fixation comprenant :
- une face d'appui venant au contact ou sensiblement au contact de la face principale du capteur, et
- un moyen de blocage de la deuxième partie cylindrique du capteur.

Le moyen de blocage du moyen de fixation peut comprendre deux arcs pouvant former une pince permettant le clippage du capteur.

Le capteur peut comprendre en outre une première face latérale s'étendant perpendiculairement ou sensiblement perpendiculairement depuis la face principale, notamment en direction de la deuxième partie cylindrique, une deuxième face latérale s'étendant perpendiculairement ou sensiblement perpendiculairement depuis la face principale, notamment en direction de la deuxième partie cylindrique, de sorte à ce que la deuxième face latérale soit parallèle ou sensiblement parallèle à la première face latérale et en vis-à-vis ou sensiblement en vis-à-vis l'une de l'autre, et le moyen de fixation peut comprendre :
- une face de réception venant au contact ou sensiblement au contact de la première face latérale du capteur,
- une languette venant au contact ou sensiblement au contact d'au moins une partie de la deuxième face latérale du capteur.

Le moyen de fixation peut comprendre un moyen d'anti-rotation du moyen de fixation par rapport à l'alésage de l'élément.

Le moyen d'anti rotation peut comprendre au moins un doigt s'étendant d'une part radialement ou sensiblement radialement par rapport à l'axe principal de l'alésage et d'autre part s'étendant en vis-à-vis de la portion cylindrique, notamment en faisant un angle de l'ordre de 17 degrés par rapport à l'axe principal de sorte à pouvoir venir au contact ou sensiblement au contact de la portion cylindrique de l'élément.

Le moyen d'anti rotation peut comprendre deux doigts.

Le moyen de fixation peut être en matériau polymère, notamment en polyam ide.

L'invention porte encore sur un système de freinage de véhicule, notamment de véhicule automobile, comprenant un agencement tel que défini précédemment.

L'invention porte encore sur un véhicule, notamment un véhicule automobile, comprenant un système de freinage tel que défini précédemment et/ou un agencement tel que défini précédemment.

Ces objets, caractéristiques et avantages de la présente invention seront exposés en détail dans la description suivante d'un mode de réalisation d'un véhicule automobile, faite à titre non-limitatif en relation avec les figures jointes parmi lesquelles :
La figure 1 est une vue schématique d'un véhicule automobile selon un mode de réalisation de l'invention.
La figure 2 est une vue partielle en perspective d'un système de freinage selon un mode de réalisation de l'invention.
La figure 3 est une vue en perspective d'un agencement selon un mode de réalisation de l'invention.
La figure 4 est une vue de détail en perspective de l'agencement selon le mode de réalisation de l'invention.
La figure 5 est une vue en perspective d'un dispositif d'assistance au freinage de l'agencement selon le mode de réalisation de l'invention.
La figure 6 est une vue en perspective d'un capteur de mesure de dépression de l'agencement selon le mode de réalisation de l'invention.
La figure 7 est une vue en perspective d'un moyen de fixation de l'agencement selon le mode de réalisation de l'invention.
La figure 8 est une autre vue en perspective du moyen de fixation de l'agencement selon le mode de réalisation de l'invention.

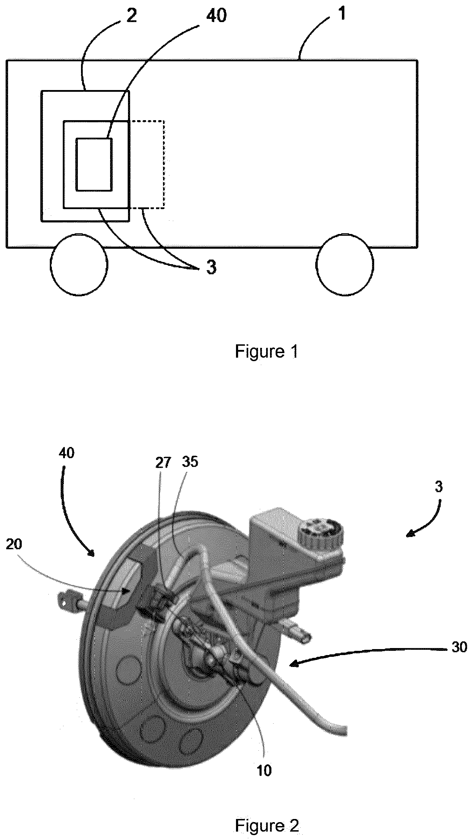

Un véhicule, par exemple un véhicule automobile 1, selon un mode de réalisation de l'invention, est illustré schématiquement sur la figure 1. Le véhicule automobile 1 comprend un compartiment moteur 2 agencé à l'avant du véhicule et/ou à l'arrière du véhicule. Le véhicule automobile 1 est équipé d'un système d'amplification de freinage pneumatique (moteur thermique, par exemple à combustion interne, ou moteur électrique associé à une pompe à vide additionnelle électrique).

Le véhicule automobile 1 comprend un système de freinage 3 selon un mode de réalisation de l'invention. Le véhicule automobile 1, en particulier le système de freinage 3, comprend un agencement 40 selon un mode de réalisation de l'invention.

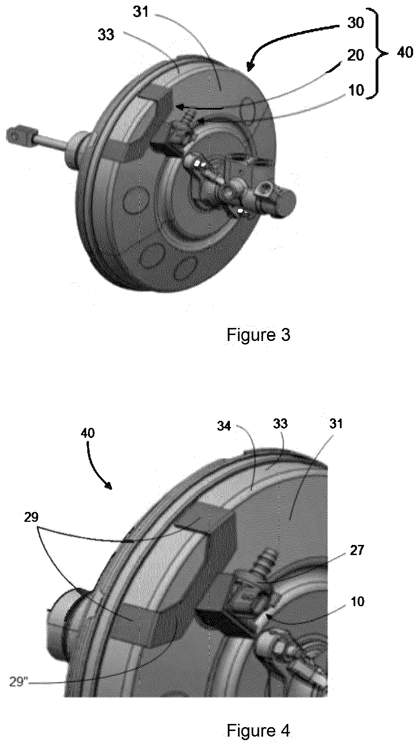

Comme illustré sur les figures 2, 3 et 4, l'agencement 40 comprend un dispositif d'assistance au freinage 30.

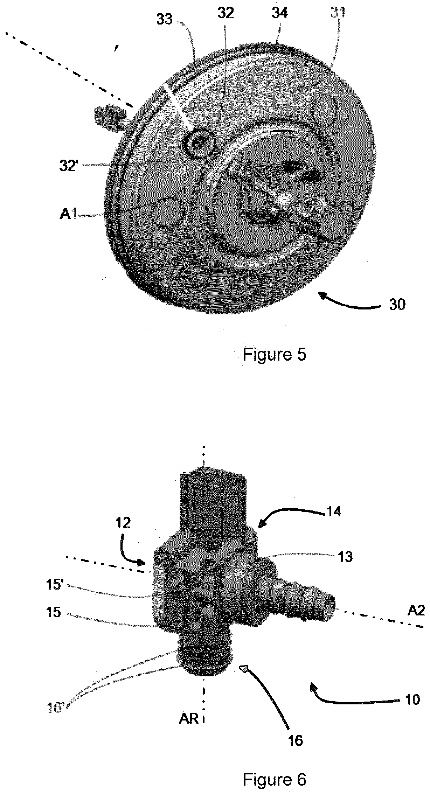

Plus précisément, comme illustré en particulier sur la figure 5, le dispositif d'assistance au freinage 30 comprend une portion cylindrique 33. Le dispositif d'assistance au freinage 30 comprend encore une face circulaire 31, ou sensiblement circulaire, de préférence une surface 31 circulaire et bombée, ou conique, ou sensiblement conique. Le dispositif d'assistance au freinage 30 comprend encore un alésage 32 d'axe principal A1 ménagé au sein ou au niveau de la face circulaire 31.

L'agencement 40 comprend encore un capteur 10, plus précisément, un capteur de mesure de dépression.

Comme illustré sur la figure 6, le capteur 10 comprend un embout 16 cylindrique, ou sensiblement cylindrique, d'axe AR. Par exemple cet embout 16 est muni de portions coniques 16' de manière à faciliter son insertion et rendre difficile son retrait. Cet embout 16 est destiné à être inséré, au moins partiellement, dans l'alésage 32. Une fois l'embout 16 ainsi inséré dans l'alésage 32, l'axe principal A1 de l'alésage 32 du dispositif d'assistance au freinage 30 et l'axe AR de l'embout cylindrique 16 se retrouvent alors confondus ou sensiblement confondus, c'est-à-dire dans une tolérance de l'ordre de 5 degrés.

Le capteur 10 comprend encore une face principale 12 parallèle ou sensiblement parallèle à l'axe AR de l'embout 16. Le capteur 10 comprend encore une deuxième partie cylindrique 13. Cette deuxième partie cylindrique 13 a un axe secondaire A2, perpendiculaire ou sensiblement perpendiculaire, à la face principale 12 et perpendiculaire ou sensiblement perpendiculaire à l'axe AR de l'embout 16.

L'agencement 40 comprend encore un moyen de fixation 20 ou patte d'indexation du capteur 10. Ce moyen de fixation 20 est fixé au capteur 10 de manière amovible. Le moyen de fixation 20 comprend une face d'appui 22. Cette face d'appui 22 vient au contact, ou sensiblement au contact, de la face principale 12 du capteur 10 puisque le contact de la face principale 12 avec la face d'appui 22 n'est pas toujours garantie mais le quasi-contact assure néanmoins le calage du capteur 10.

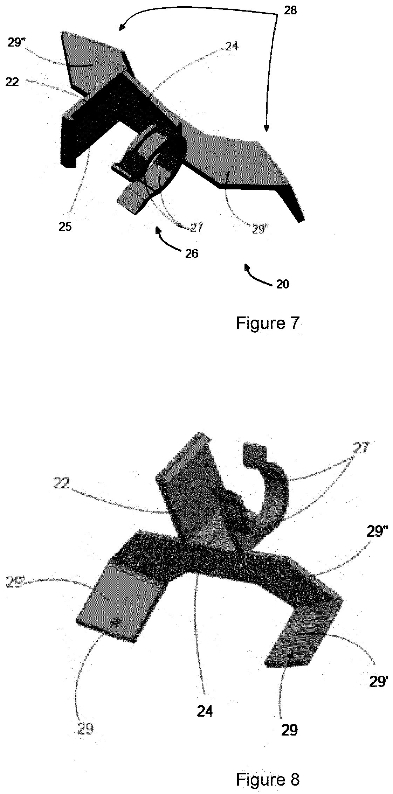

Le moyen de fixation 20 comprend encore un moyen de blocage 26 de la deuxième partie cylindrique 13 du capteur 10. Avantageusement, comme illustré sur la figure 7, le moyen de blocage 26 du moyen de fixation 20 comprend deux arcs 27 formant une pince permettant le clippage du capteur 10.

De préférence, le capteur 10 comprend encore une première face latérale 14 s'étendant perpendiculairement, ou sensiblement perpendiculairement, depuis la face principale 12, par exemple en direction de la deuxième partie cylindrique 13. Par exemple, la première face latérale 14 forme un angle compris entre 87.5 degrés et 92.5 degrés avec la face principale 12. De préférence, le capteur 10 comprend encore une deuxième face latérale 15 s'étendant perpendiculairement, ou sensiblement perpendiculairement, depuis la face principale 12, par exemple en direction de la deuxième partie cylindrique 13. Ainsi, la deuxième face latérale est parallèle, ou sensiblement parallèle, à la première face latérale 14 et en vis-à-vis, ou sensiblement en vis-à-vis, l'une de l'autre. De son côté, le moyen de fixation 20 comprend une face de réception 24. Cette face de réception 24 du moyen de fixation 20 peut alors venir au contact, ou sensiblement au contact, de la première face latérale 14 du capteur 10. Le moyen de fixation 20 comprend alors encore une languette 25. Cette languette 25 du moyen de fixation 20 vient de préférence au contact, ou sensiblement au contact, d'au moins une partie 15' de la deuxième face latérale 15 du capteur 10 pour empêcher le capteur de se déloger du moyen de fixation 20.

Le moyen de fixation 20 comprend encore un moyen d'anti-rotation 28 du moyen de fixation 20 par rapport à l'alésage 32 du dispositif d'assistance au freinage 30. De préférence, comme illustré sur les figures 7 et 8, le moyen d'anti rotation 28 comprend au moins un doigt 29, et préférentiellement deux doigts 29. Dans le cas où le moyen d'anti rotation ne comprend qu'un seul doigt, le doigt s'étend sur une partie de la portion cylindrique 33 suffisante pour jouer son rôle d'anti rotation. Ces doigts 29 s'étendent d'une part radialement, ou sensiblement radialement, par rapport à l'axe principal A1 de l'alésage 32 et d'autre part s'étendent en vis-à-vis, ou sensiblement en vis-à-vis, de la portion cylindrique 33. Par exemple, les doigts 29 en vis-à-vis de la portion cylindrique 33 font un angle de l'ordre de 17 degrés par rapport à l'axe principal A1. Ainsi, l'au moins un doigt peut venir au contact, ou sensiblement au contact, de la portion cylindrique 33 du dispositif d'assistance au freinage 30.

De préférence, comme illustré sur la figure 8, le moyen d'anti rotation 28 comprend deux doigts 29. Dans ce cas, chaque doigt 29 comprend par exemple une portion courbée 29' ou plane ou concave venant au contact, ou sensiblement au contact, de la portion cylindrique 33 pour bloquer toute rotation de l'embout 16 du capteur 10 dans l'alésage 32.

De préférence encore, des bases 29" des doigts 29 s'étendent contre, ou sensiblement contre, la face circulaire 31. Par exemple, la base 29" de chaque doigt 29 peut épouser, ou épouser sensiblement, une arête ou un chanfrein 34 assurant la jonction entre la face circulaire 31 et la portion cylindrique 33. Le calage du moyen de fixation de type clip 20 selon l'axe A1 se fait par le capteur 10 en appui sur une face au niveau du joint d'étanchéité 32'.

De préférence, le moyen de fixation 20 est réalisé en matériau polymère, par exemple en polyamide, en particulier du polyamide.

En résumé, le moyen de fixation 20 se clipse sur le capteur 10 et élimine le risque de mauvais positionnement du capteur en usine, l'orientation étant imposée par le moyen de fixation 20 à l'opérateur. Autrement dit, le moyen de fixation 20 joue le rôle de détrompeur en termes d'orientation au capteur 10.

Pour ce faire, le capteur de mesure de dépression est fixé au moyen de fixation 20 par l'intermédiaire de deux clips intégrés. D'une part, un clip est assuré par les premières et deuxième faces latérales 14, 15 qui coopèrent avec la face de réception 24 et la languette 25. D'autre part, un autre clip est assuré par les deux arcs 27 venant encercler ou entourer, au moins partiellement, la deuxième partie cylindrique 13. De préférence, ces arcs sont élastiques et acceptent une déformation lors de l'insertion de la deuxième partie cylindrique 13 entre eux. De préférence encore, ces arcs assurent un effort une fois qu'ils entourent la deuxième partie cylindrique 13 et maintiennent donc fermement le capteur 10. Ainsi, grâce aux première et deuxième faces latérales 14, 15 coincées entre la face de réception 24 et la languette 25 et du fait des arcs 27 coopérant avec la deuxième partie cylindrique 13, le capteur 10 est parfaitement maintenu au sein du moyen de fixation 20. Il en résulte que tous les degrés de liberté du capteur par rapport au moyen de fixation sont bloqués, le moyen de fixation et le capteur étant alors rendus solidaires l'un de l'autre.

A noter que le moyen de fixation 20 peut toutefois être détaché si besoin du capteur 10 sans rupture ou détérioration du capteur 10 et du moyen de fixation 20. Ainsi un démontage aisé demeure possible ce qui permet de remplacer le capteur et/ou le moyen de fixation si besoin, par exemple en cas d'endommagement du capteur et/ou du moyen de fixation.

Comme évoqué précédemment, le moyen de fixation 20 empêche le capteur 10 de pivoter autour de l'axe principal A1 de l'alésage 32 une fois que l'embout 16 du capteur est inséré dans l'alésage 32. Autrement dit, le moyen de fixation 20 évite tout pivotement de l'embout 16 du capteur 10 dans l'alésage 32 du dispositif d'assistance au freinage 30. Plus précisément, le ou les contacts entre les doigts 29 et la portion cylindrique 33 bloquent tout pivotement autour de l'axe principal A1 ou sensiblement autour de cet axe. Par exemple, chaque doigt 29 comprend une portion angulaire concave de courbure identique, ou sensiblement identique, à la courbure convexe de la portion cylindrique 33. Dans ce cas, la portion angulaire de chaque doigt vient au contact de la portion cylindrique 33 et bloque toute rotation de l'embout 16 du capteur 10 dans l'alésage 32.

En résumé, l'indexation ou orientation du capteur de mesure de la dépression par rapport au dispositif d'assistance de freinage 30 une fois assemblés, est obtenu en supprimant le degré de liberté en rotation autour de l'axe de l'alésage 32 grâce aux doigts 29. Les autres degrés de liberté entre le capteur 10 et le dispositif d'assistance au freinage 30 sont supprimés par l'embout 16 du capteur 10, aussi appelé embout sapin du fait de ses parties coniques 16'. En effet, comme évoqué précédemment, l'embout 16 du capteur 10 vient s'insérer dans l'alésage 32, de préférence via un joint d'étanchéité 32' de l'assistance de freinage.

Le procédé de montage comprend donc une étape de montage du capteur 10 sur le tuyau 35, puis une étape de mise en place du moyen de fixation 20 et enfin une étape d'insertion dans le dispositif d'assistance au freinage 30, le procédé de démontage étant effectué en miroir.

Ainsi l'agencement 40 intègre un système d'anti-rotation physique adapté à l'assistance de freinage, qui est fixe et bloque mécaniquement le capteur de mesure de dépression utilisé notamment pour la fonction « Stop and start » du véhicule. Le moyen de fixation 20 permet de s'adapter d'une part au type de capteur et d'autre part au type de dispositif d'assistance de freinage. Ainsi le capteur 10 de mesure de dépression peut être standard, en particulier sa géométrie, et ce quel que soit le type de véhicule, le moyen de fixation s'adaptant aux types de dispositifs d'assistance au freinage des différents véhicules, en particulier sur les véhicules utilisant un capteur monté sur un tuyau 35 d'assistance de freinage comme illustré sur la figure 2. Un même capteur peut donc couvrir tous les cas d'application, sur différents types de véhicule, par exemple équipés d'une direction à droite ou à gauche, ou encore sur des dispositifs d'assistance de freinage de taille différente.

Grâce à la fonction anti-rotation utilisant au moins un doigt venant s'appuyer sur le contour du dispositif d'assistance de freinage, le moyen de fixation 20 supportant le capteur 10 assure le positionnement correct du capteur au sein du compartiment moteur 2. En effet, l'agencement 40 permet un positionnement spécifique du capteur 10 lors du montage en usine qui ne dépend pas de la dextérité de l'opérateur. L'orientation correcte du capteur favorise un parcours optimal du tuyau 35 d'assistance de freinage sur lequel le capteur est assemblé. Ce parcours optimal permet d'éviter tout contact du tuyau 35 avec son environnement, même en cas de vibrations, les jeux fonctionnels étant assurés. Tout risque d'usure du tuyau 35 par contacts et/ou abrasion avec des éléments adjacents, voire à terme de percement ou perforation, est évité. L'efficacité du système de freinage 3 est alors sûre, fiable et durable.

En remarque, la solution atteint donc l'objectif recherché d'éviter le contact entre le tuyau sur lequel est monté le capteur de mesure de dépression et un élément du compartiment moteur et présente les avantages suivants :
- Elle est simple à mettre en oeuvre ;
- Elle est économique, le matériau utilisé étant peu coûteux;
- Elle peut être appliquée à tous les types de véhicules automobiles utilisant un capteur de mesure de dépression monté sur le tuyau d'assistance de freinage, quelle que soit leur gamme, voire appliquée sur d'autres véhicules ou moyens de transport.

## Revendications

1. Agencement (40) comprenant :
- un élément (30), ledit élément (30) étant un dispositif d'assistance au freinage de véhicule, notamment de véhicule automobile (1), comprenant une portion cylindrique (33) et une face circulaire (31), ou sensiblement circulaire, notamment bombée ou conique ou sensiblement conique, un alésage (32) d'axe principal (A1) étant ménagé au sein de cette face circulaire (31),
- un capteur (10) de mesure de dépression, comprenant un embout (16) cylindrique ou sensiblement cylindrique inséré au moins partiellement dans l'alésage (32) de sorte que l'axe principal (A1) de l'élément (30) et l'axe (AR) de l'embout cylindrique (16) soient confondus ou sensiblement confondus,
le capteur (10) comprenant :
- une face principale (12) parallèle ou sensiblement parallèle à l'axe (AR) de l'embout cylindrique (16),
- une deuxième partie cylindrique (13) d'axe secondaire (A2) perpendiculaire ou sensiblement perpendiculaire à la face principale (12) et perpendiculaire ou sensiblement perpendiculaire à l'axe (AR) de l'embout cylindrique (16),
**caractérisé en ce que** l'agencement (40) comprend un moyen de fixation (20) du capteur (10) destiné à être fixé de manière amovible au capteur (10) et apte à empêcher le capteur (10) de pivoter autour de l'axe principal (A1) de l'alésage (32),
le moyen de fixation (20) comprenant :
- une face d'appui (22) venant au contact ou sensiblement au contact de la face principale (12) du capteur (10), et
- un moyen de blocage (26) de la deuxième partie cylindrique (13) du capteur (10).

2. Agencement (40) selon la revendication précédente, **caractérisé en ce que** le moyen de blocage (26) du moyen de fixation (20) comprend deux arcs (27) formant une pince permettant le clippage du capteur (10).

3. Agencement (40) selon l'une des revendications précédentes, **caractérisé en ce que** le capteur (10) comprend en outre une première face latérale (14) s'étendant perpendiculairement ou sensiblement perpendiculairement depuis la face principale (12), notamment en direction de la deuxième partie cylindrique (13), une deuxième face latérale (15) s'étendant perpendiculairement ou sensiblement perpendiculairement depuis la face principale (12), notamment en direction de la deuxième partie cylindrique (13), de sorte à ce que la deuxième face latérale (15) soit parallèle ou sensiblement parallèle à la première face latérale (14) et en vis-à-vis ou sensiblement en vis-à-vis l'une de l'autre,
et **en ce que** le moyen de fixation (20) comprend :
- une face de réception (24) venant au contact ou sensiblement au contact de la première face latérale (14) du capteur (10),
- une languette (25) venant au contact ou sensiblement au contact d'au moins une partie (15') de la deuxième face latérale (15) du capteur (10).

4. Agencement (40) selon l'une des revendications précédentes, **caractérisé en ce que** le moyen de fixation (20) comprend un moyen d'anti-rotation (28) du moyen de fixation (20) par rapport à l'alésage (32) de l'élément (30).

5. Agencement (40) selon la revendication précédente, **caractérisé en ce que** le moyen d'anti rotation (28) comprend au moins un doigt (29) s'étendant d'une part radialement ou sensiblement radialement par rapport à l'axe principal (A1) de l'alésage (32) et d'autre part s'étendant en vis-à-vis de la portion cylindrique (33), notamment en faisant un angle de l'ordre de 17 degrés par rapport à l'axe principal (A1) de sorte à pouvoir venir au contact ou sensiblement au contact de la portion cylindrique (33) de l'élément (30).

6. Agencement (40) selon la revendication précédente, **caractérisé en ce que** le moyen d'anti rotation (28) comprend deux doigts (29).

7. Agencement (40) selon l'une des revendications précédentes, **caractérisé en ce que** le moyen de fixation (20) est en matériau polymère, notamment en polyamide.

8. Système de freinage (3) de véhicule, notamment de véhicule automobile (1), **caractérisé en ce qu'**il comprend un agencement (40) selon l'une des revendications précédentes.

9. Véhicule, notamment véhicule automobile (1), **caractérisé en ce qu'**il comprend un système de freinage (3) selon la revendication précédente et/ou un agencement (40) selon l'une des revendications 1 à 7.

## Patentansprüche

1. Anordnung (40), umfassend:
- ein Element (30), wobei das Element (30) eine Vorrichtung zur Unterstützung der Bremsung eines Fahrzeugs, insbesondere eines Kraftfahrzeugs (1), ist, umfassend einen zylindrischen Abschnitt (33) und eine kreisförmige oder im Wesentlichen kreisförmige, insbesondere gewölbte oder konische oder im Wesentlichen konische Fläche (31), wobei im Inneren dieser kreisförmigen Fläche (31) eine Bohrung (32) mit einer Hauptachse (A1) vorgesehen ist,
- einen Sensor (10) zur Messung eines Unterdrucks, umfassend ein zylindrisches oder im Wesentlichen zylindrisches Endstück (16), das zumindest teilweise in die Bohrung (32) eingesetzt ist, so dass die Hauptachse (A1) des Elements (30) und die Achse (AR) des zylindrischen Endstücks (16) zusammenfallen oder im Wesentlichen zusammenfallen,
wobei der Sensor (10) Folgendes umfasst:
- eine Hauptfläche (12), die parallel oder im Wesentlichen zur Achse (AR) des zylindrischen Endstücks (16) verläuft,
- einen zweiten zylindrischen Teil (13) mit einer Nebenachse (A2), die senkrecht oder im Wesentlichen senkrecht zur Hauptfläche (12) und senkrecht oder im Wesentlichen senkrecht zur Achse (AR) des zylindrischen Endstücks (16) verläuft,
**dadurch gekennzeichnet, dass** die Anordnung (40) ein Mittel (20) zur Befestigung des Sensors (10) umfasst, das dazu bestimmt ist, lösbar am Sensor (10) befestigt zu sein, und dazu geeignet ist, den Sensor (10) an einer Drehung um die Hauptachse (A1) der Bohrung (32) zu hindern,
wobei das Befestigungsmittel (20) Folgendes umfasst:
- eine Auflagefläche (22), die mit der Hauptfläche (12) des Sensors (10) in Kontakt kommt oder im Wesentlichen in Kontakt kommt, und
- ein Mittel (26) zum Blockieren des zweiten zylindrischen Teils (13) des Sensors (10).

2. Anordnung (40) nach dem vorangehenden Anspruch, **dadurch gekennzeichnet, dass** das Blockierungsmittel (26) des Befestigungsmittels (20) zwei Bögen (27) umfasst, die eine Klammer bilden, die das Einklemmen des Sensors (10) ermöglichen.

3. Anordnung (40) nach einem der vorangehenden Ansprüche,
**dadurch gekennzeichnet, dass** der Sensor (10) ferner Folgendes umfasst: eine erste Seitenfläche (14), die sich von der Hauptfläche (12) senkrecht oder im Wesentlichen senkrecht, insbesondere in Richtung des zweiten zylindrischen Teils (13), erstreckt, und eine zweite Seitenfläche (15), die sich von der Hauptfläche (12) senkrecht oder im Wesentlichen senkrecht, insbesondere in Richtung des zweiten zylindrischen Teils (13) erstreckt, so dass die zweite Seitenfläche (15) parallel oder im Wesentlichen parallel zur ersten Seitenfläche (14) ist und dieser gegenüberliegt oder im Wesentlichen gegenüberliegt,
und dass das Befestigungsmittel (20) Folgendes umfasst:
- eine Aufnahmefläche (24), die mit der ersten Seitenfläche (14) des Sensors (10) in Kontakt kommt oder im Wesentlichen in Kontakt kommt,
- eine Lasche (25), die mit zumindest einem Teil (15') der zweiten Seitenfläche (15) des Sensors (10) in Kontakt kommt oder im Wesentlichen in Kontakt kommt.

4. Anordnung (40) nach einem der vorangehenden Ansprüche, **dadurch gekennzeichnet, dass** das Befestigungsmittel (20) ein Mittel (28) zum Verhindern der Rotation des Befestigungsmittels (20) in Bezug auf die Bohrung (32) des Elements (30) umfasst.

5. Anordnung (40) nach dem vorangehenden Anspruch, **dadurch gekennzeichnet, dass** das Rotationsverhinderungsmittel (28) mindestens einen Finger (29) umfasst, der sich einerseits radial oder im Wesentlichen radial zur Hauptachse (A1) der Bohrung (32) erstreckt und sich andererseits gegenüber dem zylindrischen Abschnitt (33), insbesondere in einem Winkel von etwa 17 Grad zur Hauptachse (A1), erstreckt, um mit dem zylindrischen Abschnitt (33) des Elements (30) in Kontakt oder im Wesentlichen in Kontakt kommen zu können.

6. Anordnung (40) nach dem vorangehenden Anspruch, **dadurch gekennzeichnet, dass** das Rotationsverhinderungsmittel (28) zwei Finger (29) umfasst.

7. Anordnung (40) nach einem der vorangehenden Ansprüche, **dadurch gekennzeichnet, dass** das Befestigungsmittel (20) aus einem polymeren Material, insbesondere Polyamid, gebildet ist.

8. Bremssystem (3) eines Fahrzeugs, insbesondere eines Kraftfahrzeugs (1), **dadurch gekennzeichnet, dass** es eine Anordnung (40) nach einem der vorangehenden Ansprüche umfasst.

9. Fahrzeug, insbesondere Kraftfahrzeug (1), **dadurch gekennzeichnet, dass** es ein Bremssystem (3) nach dem vorangehenden Anspruch und/oder eine Anordnung (40) nach einem der Ansprüche 1 bis 7 umfasst.

## Claims

1. Arrangement (40) comprising:
- an element (30), said element (30) being a vehicle braking assistance device, notably for a motor vehicle (1), comprising a cylindrical portion (33) and a circular or substantially circular face (31), notably domed or conical or substantially conical, a bore (32) of main axis (A1) being formed in this circular face (31),
- a vacuum measurement sensor (10), comprising a cylindrical or substantially cylindrical end-fitting (16) inserted at least partially into the bore (32) so that the main axis (A1) of the element (30) and the axis (AR) of the cylindrical end-fitting (16) coincide or substantially coincide,
the sensor (10) comprising:
- a main face (12) that is parallel or substantially parallel to the axis (AR) of the cylindrical end-fitting (16),
- a second cylindrical part (13) of secondary axis (A2) that is at right angles or substantially at right angles to the main face (12) and at right angles or substantially at right angles to the axis (AR) of the cylindrical end-fitting (16),
**characterized in that** the arrangement (40) comprises a fixing means (20) for the sensor (10) intended to be fixed removably to the sensor (10) and that can prevent the sensor (10) from pivoting about the main axis (A1) of the bore (32),
the fixing means (20) comprising:
- a bearing face (22) coming into contact or substantially into contact with the main face (12) of the sensor (10), and
- an immobilizing means (26) for the second cylindrical part (13) of the sensor (10).

2. Arrangement (40) according to the preceding claim, **characterized in that** the immobilizing means (26) of the fixing means (20) comprises two arcs (27) forming a clamp making it possible to clip the sensor (10).

3. Arrangement (40) according to one of the preceding claims, **characterized in that** the sensor (10) also comprises a first lateral face (14) extending at right angles or substantially at right angles from the main face (12), notably towards the second cylindrical part (13), a second lateral face (15) extending at right angles or substantially at right angles from the main face (12), notably towards the second cylindrical part (13), so that the second lateral face (15) is parallel or substantially parallel to the first lateral face (14) and facing or substantially facing one another,
and **in that** the fixing means (20) comprises:
- a receiving face (24) coming into contact or substantially into contact with the first lateral face (14) of the sensor (10),
- a tongue (25) coming into contact or substantially into contact with at least a part (15') of the second lateral face (15) of the sensor (10).

4. Arrangement (40) according to one of the preceding claims, **characterized in that** the fixing means (20) comprises a means for preventing rotation (28) of the fixing means (20) relative to the bore (32) of the element (30) .

5. Arrangement (40) according to the preceding claim, **characterized in that** the rotation prevention means (28) comprises at least one finger (29) extending on the one hand radially or substantially radially relative to the main axis (A1) of the bore (32) and on the other hand extending facing the cylindrical portion (33), notably by forming an angle of the order of 17 degrees relative to the main axis (A1) so as to be able to come into contact or substantially into contact with the cylindrical portion (33) of the element (30).

6. Arrangement (40) according to the preceding claim, **characterized in that** the rotation prevention means (28) comprises two fingers (29).

7. Arrangement (40) according to one of the preceding claims, **characterized in that** the fixing means (20) is made of a polymer material, notably of polyamide.

8. Braking system (3) of a vehicle, notably of a motor vehicle (1), **characterized in that** it comprises an arrangement (40) according to one of the preceding claims.

9. Vehicle, notably a motor vehicle (1), **characterized in that** it comprises a braking system (3) according to the preceding claim and/or an arrangement (40) according to one of Claims 1 to 7.
